Europäisches Patentamt

(19) **European Patent Office**

Office européen des brevets

(11) Veröffentlichungsnummer : **0 195 058**
**B1**

(12) **EUROPÄISCHE PATENTSCHRIFT**

(45) Veröffentlichungstag der Patentschrift :
17.05.89

(51) Int. Cl.⁴ : **A 47 L 9/24, F 16 L 37/18**

(21) Anmeldenummer : 85904807.6

(22) Anmeldetag : 16.09.85

(86) Internationale Anmeldenummer :
PCT/EP 85/00475

(87) Internationale Veröffentlichungsnummer :
WO/8601703 (27.03.86 Gazette 86/07)

(54) HANDSTAUBSAUGER.

(30) Priorität : 17.09.84 DE 8427360 U

(43) Veröffentlichungstag der Anmeldung :
24.09.86 Patentblatt 86/39

(45) Bekanntmachung des Hinweises auf die Patenterteilung : 17.05.89 Patentblatt 89/20

(84) Benannte Vertragsstaaten :
AT BE CH DE FR GB IT LI LU NL SE

(56) Entgegenhaltungen :
DE—A— 1 910 444
DE—A— 3 100 824
FR—A— 1 352 496
US—A— 4 254 973

(73) Patentinhaber : Progress Elektrogeräte GmbH
Lauterstrasse 8 Postfach 1869
D-7440 Nürtingen 10 (DE)

(72) Erfinder : JACOB, Gernot
Stahlbühlstrasse 35
D-7251 Weissach-Flacht (DE)
Erfinder : RADOM, Leon
Kesselenstrasse 26
D-7101 Ellhofen (DE)

(74) Vertreter : Patentanwälte Kirschner & Grosse
Forstenrieder Allee 59
D-8000 München 71 (DE)

## Beschreibung

Die Erfindung bezieht sich auf einen Handstaubsauger, bestehend aus einem das Sauggebläse und den Staubbeutel aufnehmenden, einen Saugstutzen aufweisenden sowie mit einem Handgriff verbindbaren Gehäuse, wobei am Saugstutzen ein verriegelbares Rohrzwischenstück anschließbar ist, gemäß dem einleitenden Teil des Patentanspruchs 1.

Bei Handstaubsaugern ist es bekannt, das Saugwerkzeug, z. B. eine Tüllen- oder Querdüse, Teppich-, Polster-, Heizkörperdüse oder dgl., mittels einer kraftschlüssigen Steckverbindung mit dem Saugstutzen des Gehäuses zu verbinden. Sofern bei Saugarbeiten das Gehäuse in der Nähe der Saugdüse hinderlich ist, bedient man sich eines Rohrzwischenstückes, welches zwischen dem Saugstutzen des Gehäuses und dem Saugwerkzeug einsetzbar ist. Diese vorgenannten « Steckverbindungen » sind in Form eines Steckkonus' gebildet ; sie ermöglichen eine relativ einfache und dichte Verbindung zwischen den Rohrteilen. Besonders nachteilig ist die oft schwierige Trennung der so miteinander verbundenen Teile. Innen- und Außenkonus der kraftschlüssigen Verbindung sind oft nur unter Gewaltanwendung bzw. durch Erwärmung des übergreifenden Teiles der Konus-Steckverbindung zu trennen.

Andere Handstaubsauger vermeiden diesen Nachteil mittels verriegelbarer Steckverbindungen der Rohrteile. Bei derartigen formschlüssigen Steckverbindungen sind die Verbindungsenden der Rohrteile zylindrisch ausgebildet, wobei zur Befestigung eine Raste, z. B. eine Kugelraste, dient. Die Rastkugel ist z. B. am Innenrohr der Steckverbindung angeordnet und greift in eine Rastöffnung des Außenrohres. Bei Trennen der Verbindung wird mittels des Fingers die Rastkugel gegen die Last einer Feder abwärts gedrückt, so daß nunmehr — bei vergleichsweise sauftem Zug — die Rohrteile der Steckverbindung trennbar sind. Bei derartigen Verbindungen besteht der Nachteil, daß es beim Eindrücken der Rastkugel und gleichzeitigem Verschieben in Achsrichtung der Rohrteile zu einer Verletzung der Fingerhaut des die Kugel abwärts drückenden Fingers kommen kann. Ein weiterer Nachteil besteht auch darin, daß bei manchen derartigen Verbindungen der Federdruck zu gering ist bzw. die Federspannung nachläßt, so daß bei einer Zugbeanspruchung auf die Steckverbindung — wie es vielfach bei Saugreinigungsarbeiten unvermeidbar ist — diese sich löst.

Zur leichteren Handhabung des Staubsaugers ist es dienlich, den Schwerpunkt des Staubsaugers möglichst tiefliegend zu haben, insbesondere dann, wenn Saugarbeiten « über Kopf » auszuführen sind, z. B. beim Absaugen von Gardinenaufhängungen oder dgl. Bei anderen Saugarbeiten, z. B. beim Absaugen des Bodens unter Betten, stört oft das nahe an der Düse angeordnete Gehäuse, so daß es in diesem Fall vorteilhaft ist, ein Rohrzwischenstuck zu verwenden ; indessen wird nach dem Einsetzen des Zwischenstückes der Staubsauger überlang ; er ist dann unhandlich.

Aus der FR-A-1 352 496 ist die Verbindung eines Rohrstückes mit einem der Stutzen eines Staubsaugers bekannt, bei der die Verriegelung durch eine axiale formschlüssige Führung der zu verbindenden Rohrteile sowie mittels einer Klemme erfolgt. Die Klemme ist als mit einer Handhabe versehene Drehkeilverriegelung ausgestaltet. Die Verriegelungswirkung wird durch eine Verformung eines geschwächten Wandabschnitts des Rohrstutzens hervorgerufen, der durch einen Drehkeil auf das zu befestigende Rohrstück gedrückt wird. Aus der DE-A-19 10 444 ist ein teleskopierbares Staubsaugerrohr bekannt, deren Führungsabschnitte in der Auszugsendstellung in gegenseitigen Klemmsitz bringbar sind, wozu das Außenrohr eine einwärtsgerichtete Erhöhung besitzt, der ein Durchtrittskanal in einem endseitigen querschnittsgrößeren Ringbund des Innenrohres zugeordnet ist.

Der Erfindung liegt die Aufgabe zugrunde, die Handhabung des Staubsaugers zu erleichtern ; die Länge des Staubsaugers soll auch bei Verwendung des Rohrzwischenstückes nicht geändert werden. Diese Aufgabe wird gemäß der Lehre des Anspruches 1 gelöst.

Das Rohrzwischenstück ist bei normalen Saugarbeiten zwischen dem Gehäuse und dem Handgriff angeordnet ; es ist einerseits mit dem Gehäuse-Haltestutzen und andererseits mit dem Handgriff durch eine als Klemme ausgebildete Steckverbindung verriegelt. Soll z. B. der Boden unter einem Bett oder dergleichen gesaugt werden, so werden die Verriegelungen der Klemmen gelöst. Das nunmehr freie Rohrzwischenstück wird am Saugstutzen befestigt ; das andere Ende des Rohrzwischenstückes wird mit dem Saugwerkzeug verbunden. Die so zusammengefügten Teile werden nunmehr wieder verriegelt. Letztlich wird der noch freie Handgriff auf den Haltestutzen des Gehäuses gesetzt und mit diesem verriegelt. Durch das Auswechseln des Rohrzwischenstückes wird die Gesamtlänge des Staubsaugers beibehalten. Bei Saugarbeiten in engen Räumen, z. B. in einem Kraftfahrzeug, ist die Länge des Staubsaugers aber auch kürzbar, indem man das Rohrzwischenstück entfernt.

Das Verbinden des Rohrzwischenstückes mit der Klemme des anderen Rohrteiles ist nur in einer Stellung möglich ; am Verbindungsende, z. B. des Rohrzwischenstückes, ist eine Nut eingeformt, hingegen in der Klemme des anderen Rohrteiles, z. B. des Saugstutzens, eine in die Nut eingreifende Einschubzunge angebracht. Die Länge der Nut begrenzt den Einschubweg. Die aus Klemmengehäuse, Drehkeil mit Handhabe bestehende Klemme trägt ferner noch einen Anschlag zur Begrenzung des Drehwinkels des Drehkeiles. Ferner ist am Verbindungsende des Rohrteiles — im Längsquerschnitt gesehen — eine kreisbogenteilförmige Mulde eingebracht ; diese Mulde liegt bei in die Klemme eingesetztem Rohrteil dem Drehkeil gegenüber, derart, daß bei Betätigung der Klemme mittels der Handhabe der Drehkeil teilweise in die Mulde greift. Das Rohrzwischenstück bzw. Saugwerkzeug oder der Handgriff werden formschlüssig und klemmend gehalten. Das Rohrzwischenstück besitzt an einem Befestigungsende eine Klemme, wohingegen am anderen Befestigungsende eine Nut Mulde eingebracht sind.

Im Rahmen der Erfindung ist es möglich, die hier als Drehkeilverschluß dargestellte Klemme mit einem Zugkeil zu versehen, wobei dieser mittels einer handhabe betätigbar ist. Ferner besteht die Möglichkeit, Zusatzwerkzeuge, z. B. Schlauchrohr-Verlängerungen, Absaughauben und und an ihren Verbindungsenden mit den beschriebenen Klemm- und Kupplungs-Formteilen zu versehen.

In den Zeichnungen ist ein gemäß der Erfindung gebildeter Staubsauger nebst Einzelheiten hierzu dargestellt. Es zeigen :

Fig. 1 den erfinderischen Staubsauger in schaubildlicher Ansicht ;

Fig. 2 ein Rohrzwischenstück ;

Fig. 3 eine Klemme im Längsschnitt mit Kupplungsende eines Rohrteiles ;

Fig. 4 einen radialen Querschnitt durch eine Klemme mit eingesetztem Rohrteil,

Fig. 5 die Klemme gem. Fig. 3, jedoch mit eingesetztem Rohrteil.

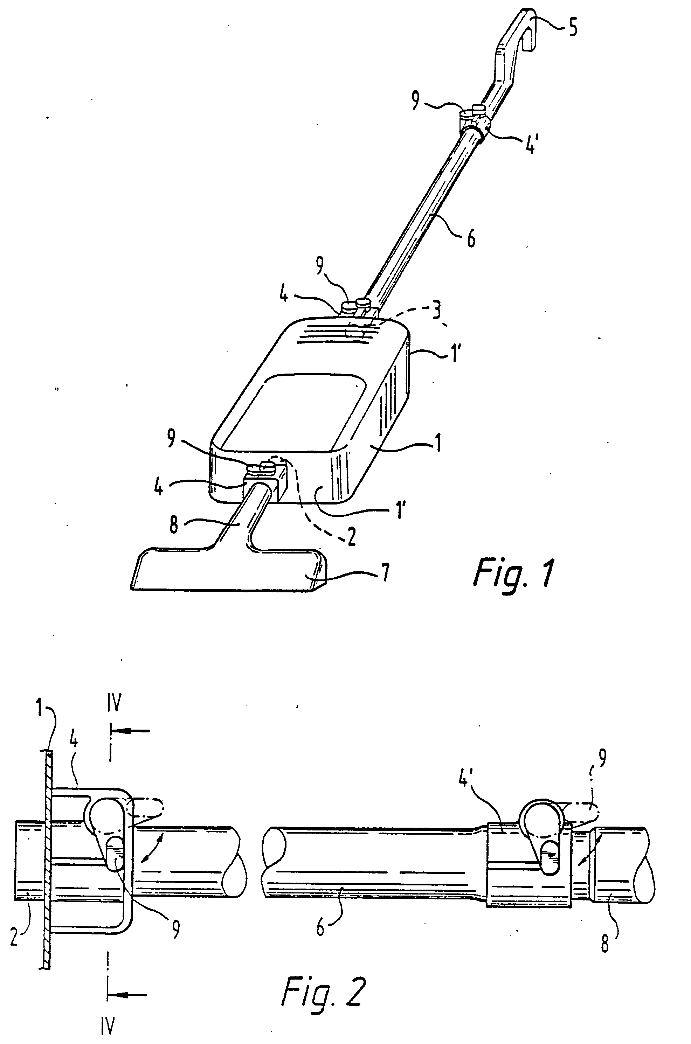

Der Staubsauger gemäß Fig. 1 besteht aus einem Gehäuse 1 mit darin angeordnetem Gebläse und Staubbeutel. Auf der einen Seite trägt das Gehäuse den Saugstutzen 2 und auf der anderen Seite den Handgriffstutzen 3. Vorzugsweise sind die Stutzen 2 und 3 Teile des Gehäuses 1 und einer Klemme 4. Im Beispiel ist hier zwischen dem Handgriff 5 und dem Handgriffstutzen 3 ein Rohrzwischenstück 6 angeordnet, welches mittels der Klemmen 4 befestigt ist. Bei dieser Anordnung des Rohrzwischenstückes ist der Schwerpunkt tief liegend gehalten, so daß der Staubsauger bei normalen Saugarbeiten, z. B. Absaugen des Bodens, leicht zu handhaben ist. Der Saugstutzen trägt das Saugwerkzeug 7, im vorliegenden Falle eine Querdüse. Soll z. B. der Boden unter einem Bett, Schrank oder dgl. gesaugt werden, so wird durch Lösen der Klemmen 4 das Rohrwischenstück entnommen und zwischen dem Saugwerkzeug 7 und dem Saugstutzen 2 eingesetzt ; der Handgriff 5 wird mit dem Handgriffstutzen 3 des Gehäuses 1 verbunden. Die Gesamtlänge des Staubsaugers wird durch das Auswechseln des Rohrzwischenstückes 6 nicht geändert.

Wie weiter aus Fig. 2 hervorgeht, ist hier das Rohrzwischenstück 6 mit dem Handgriffstutzen 3 des Gehäuses 1 mittels der Klemme 4 verbunden, wohingegen das andere Ende des Rohrzwischenstückes selbst als Klemme ausgebildet ist und z. B. den Handgriff 5 hält. Jede Klemme besitzt eine Handhabe 9 zum Lösen und Spannen der Klemme. In der dargestellten, scharf ausgezogenen Lage der Handhabe ist die Klemme gespannt ; in der gestrichelt gezeichneten Lage der Handhabe gelöst. Soll z. B. zum Absaugen des Bodens unter einem Bett das Rohrzwischenstück 6 zwischen dem Saugwerkzeug 7 (Fig. 1) und dem Saugstutzen 2 eingesetzt werden, so geschieht dies durch Stellen der Handhaben in die gestrichelt dargestellte Lage ; das Rohrzwischenstück kann nunmehr entnommen und in die vorbezeichnete Anordnung gebracht werden, wobei sodann mittels der Handhaben 9 die Klemmen am Saugstutzen und am Stutzen des Saugwerkzeuges 7 geschlossen werden.

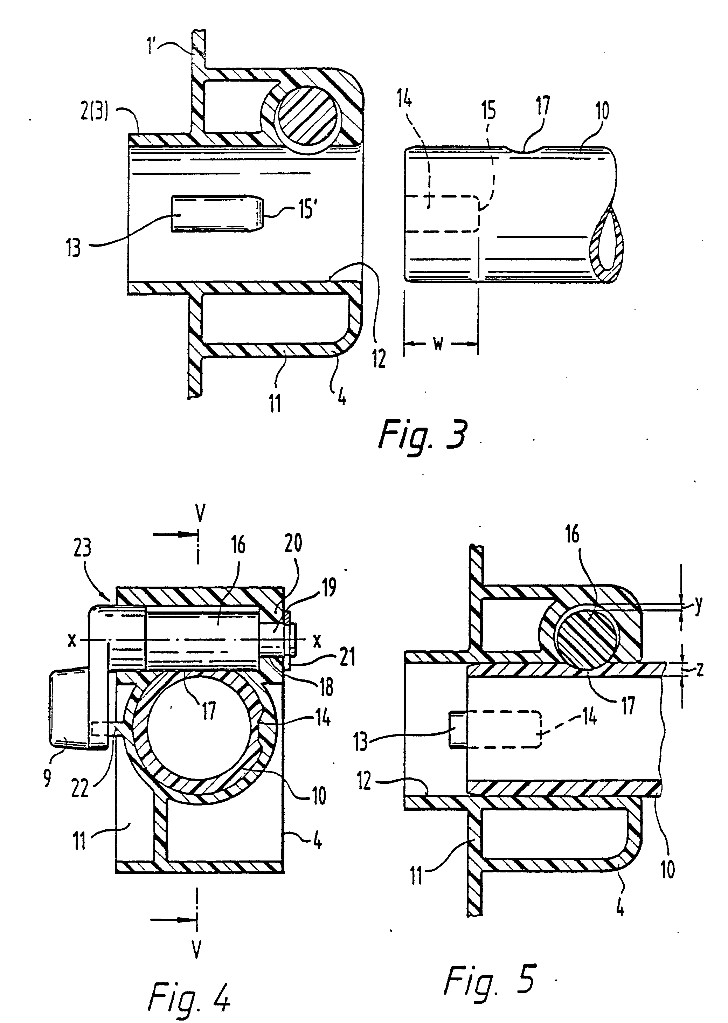

Gemäß Fig. 3 soll in eine, im Längsschnitt dargestellte Klemme 4 der Rohrteil 10, z. B. eines Rohrzwischenstückes 6 eingesetzt werden. Die Klemme besteht im wesentlichen aus einem am Gehäuseteil 1' angegormten Klemmengehäuse 11 mit einer Einschubbuchse 12, in welcher der Rohrteil 10 im leichten Schiebesitz einsetzbar ist. In der Einschubbuchse ist ein Einschubwulst 13 angeordnet, wohingegen im Rohrteil 10 eine Nut 14 eingeformt ist. Beim Einsetzen des Rohrteiles in die Einschubbuchse der Klemme greift der Einschubwulst in die Nut ; sie begrenzt den Einschubweg « w » durch den Anschlag 15 bzw. 15'. In dieser Stellung ist der Rohrteil mit der Klemme verriegelbar. Im Klemmengehäuse 11 ist in einer Drehkeil-Aufnahme 23 der Drehkeil 16 gelagert, wohingegen im Rohrteil 10 eine Mulde 17 eingeformt ist ; diese Mulde liegt in der Anschlagstellung der zu verbindenden Teile dem Drehkeil gegenüber. Wird mittels der mit dem Drehkeil verbundenen Handhabe 9 (Fig. 1) der Drehkeil um den Winkel eines Halbkreises gedreht, so greift er in die Mulde, so daß nunmehr die zu verbindenden Teile formschlüssig miteinander verriegelt sind.

Fig. 4 ist ein Schnitt IV-IV durch eine Klemme 4 mit eingesetztem Rohrteil 10 (Fig. 2), wohingegen Fig. 5 ein axialer Längsschnitt V-V durch die Klemme gem. Fig. 4 ist. In der dargestellten Lage ist der Roihrteil 10 mit der Klemme 4 verriegelt. Der mit der Handhabe 9 verbundene Drehkeil 16 ist mittels eines Zapfens 19 durch eine Bohrung 18 im Bodenteil 20 der Drehkeil-Aufnahme 23 geführt. Eine Blattfederklemme 21 dient zur Sicherung des Drehkeiles in seiner Aufnahme 23. Der Drehkeil ist exzentrisch zur Drehachse « x » gestellt, derart, daß dieser bei einer Drehung der Handhabe um den Winkel eines Halbkreises um die Strecke « y » — entsprechend etwa der halben Wandstärke « z » des Rohrteiles 10 — in die Mulde 17 greift. In der dargestellten Spannstellung des Drehkeiles liegt die Handhabe 9 gegen einen — hier in Form einer Rippe gestalteten — Handhaben-Anschlag 22 des Klemmengehäuses 11.

Die Klemme 4 kann im Rahmen der Erfindung auch in anderer Form gestaltet sein. So ist die an einem Ende mit dem Rohrzwischenstück 6 (Fig. 2) zur Einheit festverbunden Klemme 4' frei von einem Klemmengehäuse ; sie besteht aus der Einschubbuchse 12, an welcher die den Drehkeil 16 führende und haltende Drehkeilaufnahme 23

angesetzt ist. Die Gestaltung des Drehkeiles, seiner Führung und Sicherung entspricht der beschriebenen und gezigten Ausführung.

Am Staubsaugergehäuse 1 können — wie gezeigt — die Klemmen 4 beidseitig angebracht sein ; es besteht aber auch die Möglichkeit, die Klemme nur einseitig, z. B. nur am Saugstutzen, fest anzuordnen. In diesem Falle müßte dann der Handgriff mit einer Klemme versehen sein.

Die Klemme besteht u.a. in der gezeigten und erfinderischen Ausführung aus einem Drehkeil, der nach Art eines Exzenters gebildet ist ; es ist jedoch auch möglich, den Keil als Zugkeil zu gestalten, der z. B. mit einem Gewindeteil versehen und gegen die Last einer Feder in seine Spannstellung zu bringen ist. Bei dieser Ausführung könnte die Handhabe das zugehörige Muttergewinde tragen.

Auch kann ein Zugkeil mit nach Art eines Überzugverschlusses arbeitenden Handhabe versehen sein ; indessen besteht bei derartigen Verschlüssen stets die Gefahr einer Verletzung. Die gezeigte Ausführung ist daher « best-mode », aber auch durch ihren besonders einfachen Aufbau und ihre Sicherheit erfinderisch.

**Patentansprüche**

1. Handstaubsauger, bestehend aus einem das Sauggebläse sowie den Staubbeutel aufnehmenden, einen Saugstutzen aufweisenden sowie mit einem Handgriff verbindbaren Gehäuse, wobei am Saugstutzen ein verriegelbares Rohrzwischenstück anschließbar ist, wobei die Verriegelung mittels einer Klemme (4) erfolgt, die als mit einer Handhabe versehene Drehkeilverriegelung gebildet ist, dadurch gekennzeichnet, daß das Rohrzwischenstück (6) auch zwischen dem Staubsaugergehäuse und dem vom letzteren trennbaren Handgriff einsetz- und verriegelbar ist, daß die Verriegelung eine axial formschlüssige Führung der zu verbindenden Rohrteile aufweist, und daß zur formschlüssigen Führung eine Nut (14) und ein darin geführter Einschubwulst (13) vorgesehen sind und daß der Exzenterhub (y) des Drehkeiles (16) der Klemme (4) der Tiefe einer Mulde (17) in dem Rohrzwischenstück (6) entspricht, in die der Drehkeil (16) in der Klemmstellung eintritt.

2. Handstaubsauger nach Anspruch 1, dadurch gekennzeichnet, daß der Saugstutzen (2) des Gehäuses (1) fest mit einem Klemmengehäuse (11) verbunden oder am Gehäuseteil (1') des Staubsaugergehäuses (1) das Klemmengehäuse (11) angeformt ist.

3. Handstaubsauger nach Anspruch 1 oder 2, dadurch gekennzeichnet, daß das Rohrzwischenstück (6) an seinem einen Ende (10) eine Nut (14) und eine Mulde (17) aufweist, hingegen an seinem anderen Ende eine Klemme (4') trägt.

4. Handstaubsauger nach einem der Ansprüche 1 bis 3, dadurch gekennzeichnet, daß in allen mit der oder den Klemmen (4, 4') zu verbindenden Rohrteilen (10) eine Nut (14) und eine Mulde (17) eingebracht sind.

5. Handstaubsauger nach einem der Ansprüche 1 bis 4, dadurch gekennzeichnet, daß mit dem Handgriffstutzen (3) eine Klemme (4) fest verbunden ist.

6. Handstaubsauger nach einem der Ansprüche 1 bis 4, dadurch gekennzeichnet, daß der mit dem Handgriff (5) verbindbare Gehäuseteil (1') ein angeformtes Klemmengehäuse (11) aufweist.

7. Handstaubsauger nach einem der Ansprüche 1 bis 4, dadurch gekennzeichnet, daß das Rohrzwischenstück (6) mittels seiner Klemme (4') mit dem Handgriff (5) und mit seinem anderen Ende mit der Klemme (4) des am Gehäuse (1) angeformten Klemmengehäuses (11) verbunden ist.

8. Handstaubsauger nach einem der Ansprüche 1 bis 7, dadurch gekennzeichnet, daß der Saugstutzen (2) und das Klemmengehäuse sowie der Handgriffstutzen (3) und das zugehörige Klemmengehäuse Teile des Staubsaugergehäuses (1) sind und mit letzterem eine Baueinheit bilden.

**Claims**

1. Hand vacuum cleaner comprising a housing which receives the suction fan and the dust collector and has a handle detachably connected to said housing and a suction stub attached to said housing, a lockable intermediate pipe being detachably connected to said suction stub, the locking being effected by means of a clamp (4) which is made as a rotable cotter locking provided with a handle, characterised in that the intermediate pipe (6) is capable of being inserted and lockably attached between the vacuum cleaner housing and the handle which is detachable from said housing, that the locking is performed by an axially form-fitting guidance of the pipe portions to be connected to each other, and that the form-fitting guidance is provided by a slot (14) and a plug-in detent (13) which cooperates with said slot and that the eccentric stroke (y) of the rotatable cotter (16) of the clamp (14) is equivalent to the depth of a depression (17) of the intermediate pipe (6), into which the rotatable cotter (16) will enter when being in the clamp position.

2. Hand vacuum cleaner according to claim 1, characterised in that the suction stub (2) of the housing (1) is fixedly attached to the clamp housing (11) or that said clamp housing (11) is made integral with the housing portion (1') of the vacuum cleaner housing (1).

3. Hand vacuum cleaner according to claim 1 or 2, characterised in that one end (10) of the intermediate pipe (6) includes a slot (14) and a depression (17) and that the other end of said intermediate pipe includes a clamp (4').

4. Hand vacuum cleaner according to any of claims 1 to 3, characterised in that in all of the pipe portions (10) to be connected with the clamp or clamps (4, 4') there are embedded a slot (14) and a depression (17).

5. Hand vacuum cleaner according to any of claims 1 to 4, characterised in that a clamp (4) is fixedly attached to the handle stub (3).

6. Hand vacuum cleaner according to any of claims 1 to 4, characterised in that the housing portion (1') detachably connected to the handle (5) is provided with a clamp housing (11) integral with said housing portion (1').

7. Hand vacuum cleaner according to any of claims 1 to 4, characterised in that the intermediate pipe (6) is attached via its clamp (4') to the handle (5) and, with its other end, to the clamp (4) of the clamp housing (11) integrally arranged at the housing (1).

8. Hand vacuum cleaner according to any of claims 1 to 7, characterised in that the suction stub (2) and the clamp housing as well as the handle stub (3) and the pertaining clamp housing all are integral parts of the vacuum cleaner housing (1) and form a unitary structure therewith.

**Revendications**

1. Aspirateur-balai constitué par un logement recevant la soufflante d'aspiration ainsi que le sac de poussière, présentant une tubulure d'aspiration reliable à une poignée, une pièce intermédiaire tubulaire blocable pouvant être raccordée sur la tubulure d'aspiration, le verrouillage ou blocage s'effectuant au moyen d'une bride de serrage (4), qui est formée d'une clavette de blocage tournante munie d'une poignée, caractérisé en ce que la pièce intermédiaire tubulaire (6) peut également être intercalée et bloquée en position entre le logement de l'aspirateur et la poignée séparable de ce dernier, en ce que le blocage présente un guidage par concordance de forme axialement des pièces tubulaires à relier, et en ce que pour le guidage par concordance de forme, sont prévues une rainure (14) et une saillie d'introduction (13) à guider à l'intérieur de celle-ci et en ce que la course de levage excentrique (y) de la clavette tournante (16) de la bride (4) correspond à la profondeur d'une dépression (17) dans la pièce intermédiaire tubulaire (6) dans laquelle la clavette tournante (16) pénètre dans la position de bridage.

2. Aspirateur-balai selon la revendication 1, caractérisé en ce que la tubulure d'aspiration (2) du logement (1) est reliée fixement avec un boîtier de bridage (11) ou le boîtier de bridage (11) est formé de façon solidaire sur la partie de boîtier (1') du logement d'aspirateur (1).

3. Aspirateur-balai selon la revendication 1 ou 2, caractérisé en ce que la pièce intermédiaire tubulaire (6) présente sur une de ses extrémités (10) une rainure (14) et une dépression (17), tandis que sur son autre extrémité, elle comporte une bride (4').

4. Aspirateur-balai selon l'une des revendications 1 à 3, caractérisé en ce que dans toutes les pièces tubulaires (10) à relier avec la ou les brides (4, 4') sont agencées une rainure (14) et une dépression (17).

5. Aspirateur-balai selon l'une des revendications 1 à 4, caractérisé en ce qu'une bride (4) est reliée fixement avec la tubulure de poignée (3).

6. Aspirateur-balai selon l'une des revendications 1 à 4, caractérisé en ce que la partie de logement (1') pouvant être reliée à la poignée (5) présente un logement de bride (11) formé solidairement.

7. Aspirateur-balai selon l'une des revendications 1 à 4, caractérisé en ce que la pièce intermédiaire tubulaire (6) est reliée via sa bride (4') avec la poignée (5) et via son autre extrémité avec la bride (4) du logement de bride (11) formé solidairement sur le logement (1).

8. Aspirateur-balai selon l'une des revendications 1 à 7, caractérisé en ce que la tubulure d'aspiration (2) et le logement de bride ainsi que la tubulure de poignée (3) et le logement de bride correspondant constituent les parties du logement de l'aspirateur (1) et forment un ensemble unitaire avec ce dernier.

*Fig. 1*

*Fig. 2*

Fig. 3

Fig. 4

Fig. 5